# FASCICULE DE BREVET EUROPEEN

(11) **EP 0 708 929 B1**
(45) Date de publication et mention de la délivrance du brevet: **20.01.1999**
(21) Numéro de dépôt: 94922913.2
(22) Date de dépôt: 13.07.1994
(51) Int. Cl.: G02B 1/04, C08K 3/22, C08K 3/36

(54) **MATERIAU COMPOSITE A INDICE DE REFRACTION ELEVE, PROCEDE DE FABRICATION DE CE MATERIAU COMPOSITE ET MATERIAU OPTIQUEMENT ACTIF COMPRENANT CE MATERIAU COMPOSITE**
KOMPOSITMATERIAL MIT HOHEM BRECHUNGSINDEX, VERFAHREN ZUR HERSTELLUNG DIESES MATERIALS UND OPTISCH AKTIVE GEGENSTÄNDE AUF BASIS DIESES MATERIALS
COMPOSITE MATERIAL HAVING A HIGH REFRACTIVE INDEX, METHOD OF PRODUCING SAME AND OPTICALLY ACTIVE MATERIAL CONTAINING SAID COMPOSITE MATERIAL

(30) Priorité: 16.07.1993 FR 9308762
(43) Date de publication de la demande: 01.05.1996
(73) Titulaire: COMMISSARIAT A L'ENERGIE ATOMIQUE, 75015 Paris (FR)
(72) Inventeur: FLOCH, Hervé, F-91800 Brunoy (FR); BELLEVILLE, Philippe, F-92400 Courbevoie (FR)
(74) Mandataire: Des Termes, Monique
(86) Numéro de dépôt international: FR9400875
(87) Numéro de publication internationale: WO9502835

(56) Documents cités:
- EP-A- 0 001 498
- EP-A- 0 318 196
- WO-A-93/05875
- DE-A- 2 534 103
- DE-A- 3 018 235
- FR-A- 2 680 583
- US-A- 2 432 484
- US-A- 3 751 326

## Description

L'invention concerne un matériau composite à indice de réfraction élevé, son procédé de fabrication, ainsi que des matériaux optiquement actifs tels que des matériaux antireflet et des matériaux réfléchissants fabriqués à partir de ce matériau composite.

Les matériaux antireflet et les matériaux réfléchissants sont composés d'un substrat organique ou inorganique, recouvert de plusieurs couches dont certaines présentent les propriétés optiques spécifiques recherchées. Plus spécifiquement, les miroirs diélectriques interférentiels comprennent un substrat, recouvert d'un film diélectrique qui réfléchit une ou plusieurs longueurs d'onde souhaitées, tout en présentant une absorption intrinsèque relativement faible comparativement aux métaux classiquement utilisés pour la réalisation de miroirs.

Les matériaux antireflet ou réfléchissants présentent une multitude d'applications.

Ainsi, les substrats organiques ou inorganiques, c'est-à-dire notamment les plastiques ou les substrats vitreux, revêtus d'un film antireflet présentent un intérêt tout particulier dans les domaines suivants : les produits ophtalmiques et vidéo ou les applications architecturales comme les panneaux vitrés placés à l'extérieur de bâtiments. En outre, les matériaux antireflet et les miroirs diélectriques interférentiels peuvent également être utilisés dans les lasers de forte énergie, les applications solaires, thermiques et photovoltaïques ou encore dans les systèmes optiques intégrés.

On connaît déjà d'après l'art antérieur, des procédés permettant de réaliser ces matériaux antireflet ou ces miroirs diélectriques interférentiels. Ces procédés sont mentionnés ci-après.

Ainsi, on connaît d'après le brevet US 2 466 119, un procédé de préparation de films réfléchissants et/ou antireflet multicouches, par hydrolyse et condensation de mélanges d'halogénures de titane et/ou d'alkoxydes de silicium. Le contrôle de la porosité de ces couches s'effectue en faisant varier la température. Toutefois, l'obtention de couches présentant une bonne résistance mécanique nécessite le chauffage à des températures supérieures à celles que peuvent supporter les plastiques usuels dont la stabilité thermique est de 150°C au maximum.

Les brevets US 4 929 278 et US 4 699 812 décrivent un procédé de dépôt de films antireflet sur des substrats plastiques consistant à synthétiser un gel éthanolique dans le système SiO₂-B₂O₃-Al₂O₃-BaO jusqu'à obtenir une certaine complexité moléculaire, puis à reliquéfier ce gel en cassant mécaniquement certains ponts interpolymériques. On obtient ainsi un film poreux à faible indice de réfraction (environ 1,23), réalisé à température ambiante, ce qui permet une adaptation aux substrats en plastique. Toutefois, ce film ne présente qu'une médiocre résistance à l'abrasion.

Les brevets US 2 432 484 et US 4 271 210 divulguent la possibilité d'utiliser des colloïdes de silice ou d'alumine pour la réalisation de revêtements diélectriques antireflet, permettant d'augmenter la porosité de ces revêtements et donc d'abaisser leurs indices de réfraction. Néanmoins, les couches colloïdales obtenues ont une très faible résistance mécanique et sont particulièrement sensibles à tout contact physique.

Par ailleurs, si dans le secteur solaire, les plastiques tels que les polycarbonates, les polyacrylates, les polyallylcarbonates et autres, sont particulièrement intéressants, les substrats vitreux sont toutefois également intéressants, notamment dans le domaine de l'optique générale. Or, on comprend facilement qu'à raison d'environ 4% de pertes en réflexion pour chaque interface air-verre rencontrée (l'indice moyen du verre étant de 1,5), le bilan des pertes pour un système optique complexe est souvent lourd.

En conséquence, les opticiens ont depuis longtemps cherché à créer des films antireflet par l'usage de procédés physiques tels que l'évaporation ou la pulvérisation sous vide. Toutefois, ces procédés sont souvent sophistiqués et coûteux et généralement mal adaptés à la production de grandes séries bon marché.

Enfin, la demande de brevet français FR-A-2 680 583 du CEA décrit un matériau présentant des propriétés antireflet, ainsi que des propriétés hydrophobes et de résistance à l'abrasion. Ce matériau comprend un substrat de nature organique ou inorganique, recouvert successivement d'une couche de promoteur d'adhérence réalisée dans un matériau choisi parmi les silanes, d'une couche antireflet de colloïdes de silice enrobés d'un liant siloxane, d'une couche d'agent de couplage réalisée dans un matériau choisi parmi les silazanes et d'une couche antiabrasive d'un polymère fluoré. Toutefois, ce matériau présente une fenêtre de transmission spectrale relativement faible, de l'ordre de 100 nm seulement.

Par ailleurs, on connaît d'après l'art antérieur des documents décrivant plus spécifiquement des matériaux présentant des propriétés réfléchissantes, ainsi que leur procédé de fabrication.

Le brevet US 3 460 956 décrit la préparation de films réfléchissants en TiO₂ obtenus à partir d'hydrolysats de tétraalkyle titanates, en milieu alcoolique. Toutefois, pour une conversion efficace du film polymérique en oxyde dense, ce film doit subir un chauffage élevé, aux environs de 500°C, donc préjudiciable à tout substrat organique.

Le brevet US 2 710 267 décrit la production de films réfléchissants en TiO₂ à partir de sols alcooliques d'un alkoxyde de titane, ces sols étant hydrolysables par l'humidité atmosphérique. Toutefois, les couches obtenues ne sont pas résistantes à l'abrasion.

La demande de brevet français FR 2 682 486 du CEA fait état de la préparation de miroirs diélectriques à haute tenue au flux laser, par un procédé réalisé à température ambiante, ce qui permet une adaptation aux substrats organiques. Les couches minces présentant les propriétés optiques souhaitées sont préparées à partir de suspensions colloïdales, que l'on dépose en alternant un matériau à faible indice de réfraction avec un matériau à indice de réfraction élevé.

Toutefois, les couches colloïdales utilisées sont par nature poreuses, ce qui se traduit par un indice de réfraction faible, comparé à l'indice de réfraction du même matériau sous forme dense. Par conséquent, à réflectivité équivalente, il est nécessaire d'empiler un nombre plus important de couches pour pallier cette différence d'indice. Ceci augmente les temps de fabrication et les coûts de production.
Le document DE-A-2 534 103 décrit un complexe ou hybride, formé de colloïdes de SiO₂ et d'alcool polyvininylique préparé par chauffage au dessus de 50°C d'une suspension de colloïdes de silice dispersés dans l'alcool polyvinylique afin de faire réagir les groupes silanols avec les groupes OH du polymère, moyennant quoi on forme des liaisons chimiques covalentes fortes de type silicium-oxygène-carbone.

Afin de répondre aux défauts ou manquements des produits décrits ci-dessus, l'invention a consisté à mettre au point un nouveau matériau à indice de réfraction élevé et à utiliser celui-ci dans la fabrication, à température ordinaire, de matériaux optiquement actifs. Ceux-si sont,par exemple, soit des matériaux présentant des propriétés antireflet sur une large bande spectrale et de bonnes propriétés d'hydrophobie et de résistance à l'abrasion, soit des matériaux réfléchissants présentant ou non des propriétés de résistance à l'abrasion, par exemple.

A cet effet, l'invention concerne un matériau composite (11) à indice de réfraction élevé, comprenant une phase minérale constituée uniquement de colloïdes (1) d'oxyde de métal ou de SiO₂, et une phase organique constituée d'un polymère polyvinylique (3) soluble dans un solvant contenant de l'alcool et de l'eau, ledit polymère étant choisi parmi les polyvinylpyrrolidones et les alcools polyvinyliques, le matériau comprenant en masse de 60 à 99 % de colloïdes et entre 1 et 40% de polymère, selon les caractéristiques de l'invention lesdits colloïdes sont enrobés dans ledit polymère polyvinylique, ledit polymère ayant été réticulé de manière quasi-complète par un traitement d'insolation aux rayons ultraviolets.

Grâce à ces caractéristiques de l'invention, le polymère organique enrobe les colloïdes et diminue la porosité ouverte résiduelle de ceux-ci.

Grâce aux quantités spécifiées, le matériau de l'invention présente un indice de réfraction élevée. En effet, la présence de polymère vinylique en quantité limitée permet d'augmenter l'indice de réfraction par bouchage de la porosité résiduelle. En revanche, si la quantité de polymère dépasse un certain seuil, elle devient trop importante et l'indice de réfraction baisse.

L'invention concerne également le procédé de préparation et de dépôt du matériau composite selon la revendication 3. Selon les caractéristiques de l'invention, ce procédé comprend les étapes consistant à :
- préparer une suspension de colloïdes d'oxyde métallique ou de SiO₂ dispersés dans un alcool aliphatique,
- mélanger cette suspension colloïdale à un polymère polyvinylique soluble dans un solvant contenant de l'alcool et de l'eau,
- déposer le mélange obtenu sur un support pour former une couche uniforme, et
- faire réticuler cette couche par un traitement d'insolation aux rayons ultraviolets ayant une longueur d'onde comprise entre 180 et 280 nm environ.

Ce procédé est effectué à température ambiante, il est donc applicable à des substrats en matière plastique.

L'invention concerne également le matériau optiquement actif selon la revendication 5, comprenant un substrat de nature organique ou inorganique recouvert par au moins une couche du matériau composite selon l'invention.

En outre, l'invention concerne également deux types particuliers de matériaux optiquement actifs, à savoir un matériau antireflet et un miroir diélectrique.

Le matériau antireflet comprend un substrat de nature organique ou inorganique recouvert successivement par :
- une couche de promoteur d'adhérence réalisée dans un matériau choisi parmi les organosiloxanes,
- une couche à indice de réfraction moyen, formée d'un matériau comprenant un organosiloxane et un organométallique modifié par fixation de radicaux organiques,
- une couche du matériau à indice de réfraction élevé selon l'invention,
- une couche d'agent de liaison, réalisée dans un matériau choisi parmi les organosiloxanes,
- une couche à faible indice de réfraction formée de colloïdes d'oxyde de silicium, de fluorure de calcium ou de fluorure de magnésium enrobés d'un liant siloxane,
- une couche d'agent de couplage choisi parmi les perfluorosiloxanes et les silazanes, et
- une couche antiabrasive à base de polymère fluoré.

La structure de ce matériau a été optimisée de manière à obtenir la réponse optique de transmission maximale dans un large domaine spectral. La formule d'indices de réfraction retenue pour répondre à ce critère est du type : indice moyen/indice élevé/faible indice. On réduit ainsi la réflexion spéculaire de substrats traités en augmentant leur transmission.

La présence des couches intermédiaires de promoteurs d'adhérence permet de renforcer activement la fixation de la couche antireflet sur le substrat et d'assurer une liaison chimique efficace entre les couches optiquement actives de l'empilement.

De plus, l'imprégnation finale du substrat traité avec une couche antiabrasive en polymère fluoré à faible indice de réfraction, maintenue par la couche d'agent de couplage, permet de conserver les propriétés antireflet tout en augmentant la résistance à l'abrasion. En outre, la couche de polymère fluoré procure au dépôt son caractère antiadhésif et hydrophobe.

Les couches antireflet ainsi préparées sont homogènes et exemptes de craquelures et/ou de plans de clivage internes. En conséquence, le film antireflet obtenu est suffisamment élastique pour accepter d'éventuelles torsions ou déformations, lorsqu'il est appliqué sur un substrat plastique. De plus, ce film résiste à une atmosphère de chaleur humide et saline et révèle une bonne durée de vie, une fois immergé dans l'eau bouillante.

Enfin, l'invention concerne également un matériau réfléchissant comprenant un substrat organique ou inorganique, recouvert successivement d'au moins un ensemble de deux couches comprenant :
- une couche à faible indice de réfraction formée de colloïdes d'oxyde de silicium, de fluorure de calcium ou de fluorure de magnésium, enrobés ou non d'un liant siloxane, et
- une couche à indice de réfraction élevé réalisée dans le matériau composite selon l'invention.

Le matériau réfléchissant obtenu est un miroir diélectrique passif mono ou polychroïque, réfléchissant des longueurs d'onde allant du proche ultraviolet au proche infrarouge.

Le matériau composite à indice de réfraction élevé est particulièrement adapté pour la réalisation de miroirs interférentiels multicouches. En effet, pour obtenir une réflectivité donnée, le nombre de couches nécessaire varie selon une fonction inverse du rapport des indices de réfraction (dans le cas d'un empilement réfléchissant en couches quart d'onde à 2 indices de réfraction). Le dépôt alternatif d'une couche à faible indice de réfraction (indice bas : n_{B}) et d'une couche à indice de réfraction élevé (indice haut n_{H}), comprendra d'autant moins de couches que le support (n_{H}:n_{B}) sera grand. D'autre part, la largeur spectrale sera également fonction de la différence entre les deux indices.

Tout en conservant un procédé de fabrication de miroirs multicouches à température ambiante, grâce à l'emploi de solutions à base colloïdale, le nombre de couches nécessaires à l'obtention d'une réflectivité donnée est diminué d'un facteur 1,5 à 2, grâce à l'emploi de matériau à indice de réfraction élevé. Ceci permet de réduire la durée de fabrication d'autant ainsi que les risques de contamination.

L'invention sera mieux comprise à la lecture de la description suivante d'un mode de réalisation de l'invention, donné à titre d'exemple illustratif et non limitatif. Cette description est faite en faisant référence aux dessins joints dans lesquels :
- la figure 1 est une vue en coupe du matériau à indice de réfraction élevé, selon l'invention,
- la figure 2 illustre les différentes étapes de fabrication du matériau précité représenté en figure 1,
- la figure 3 est une vue en coupe du matériau antireflet selon l'invention,
- la figure 4 est un graphique représentant la valeur de la transmission (T), en fonction de la longueur d'onde (λ) pour un substrat en silice nue et pour un matériau antireflet selon l'invention,
- les figures 5 et 6 sont des vues en coupe d'un premier et d'un deuxième mode de réalisation du matériau réfléchissant selon l'invention,
- la figure 7 est un graphique représentant la valeur de la réflexion (R), en fonction de la longueur d'onde (λ) d'un exemple de matériau réfléchissant selon l'invention, et
- la figure 8 est un graphique représentant la valeur de la transmission (T) en fonction de la longueur d'onde (λ) d'un autre exemple de matériau réfléchissant selon l'invention.

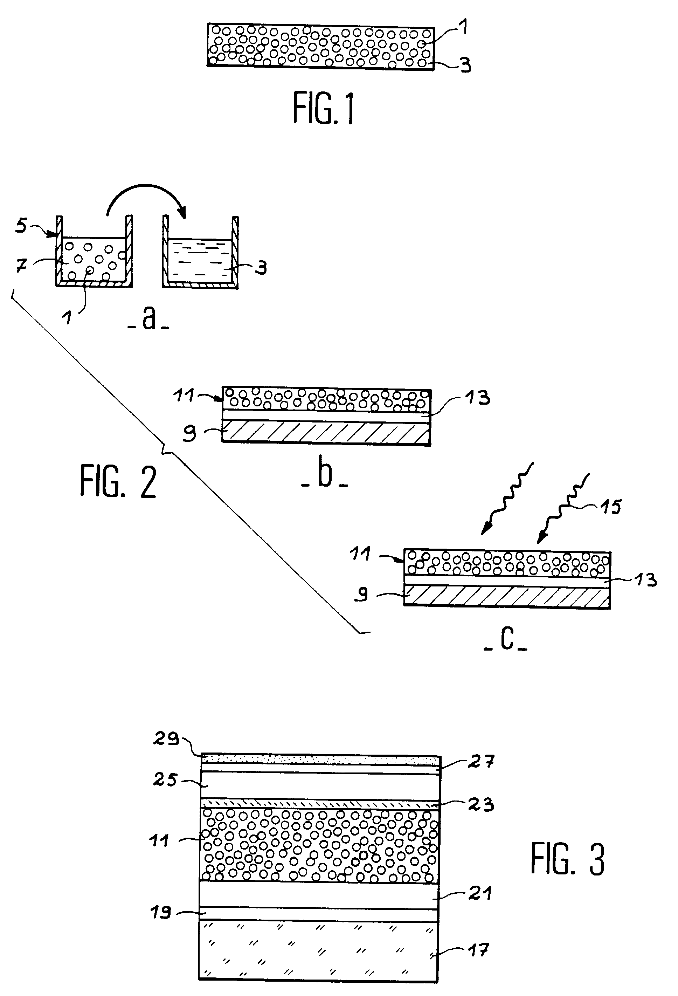

Comme illustré en figure 1, le matériau à indice de réfraction élevé selon l'invention est un matériau composite comprenant une phase minérale (colloïdes d'oxyde métallique ou de SiO₂ 1) et une phase organique (polymère organique 3).

De préférence, les colloïdes 1 d'oxyde métallique sont des colloïdes choisis parmi l'oxyde de scandium, l'oxyde d'yttrium, l'oxyde de lanthane, l'oxyde de titane, l'oxyde de zirconium, l'oxyde de hafnium, l'oxyde de thorium, l'oxyde de niobium, l'oxyde de tantale ou l'oxyde d'aluminium.

De façon avantageuse, le polymère organique 3 est un polymère polyvinylique soluble dans un solvant comprenant un alcool et de l'eau. Ce polymère est choisi parmi les polyvinylpyrrolidones ((C₆H₉ON)_{,}) et les alcools polyvinyliques ((CH₂-CHOH)ₙ).

Les figures 2a à 2c illustrent le procédé de fabrication et de dépôt de ce matériau à indice de réfraction élevé.

La première étape du procédé consiste à former une suspension colloïdale 5 à partir des colloïdes d'oxydes métalliques précités, disposés dans un solvant 7. Ce solvant 7 est de préférence choisi parmi les alcools aliphatiques saturés de formule ROH, où R représente un alkyle de 1 à 4 atomes de carbone. Le brevet FR 2 682 486 du CEA, décrit des procédés de préparation de telles suspensions colloïdales.

La suspension colloïdale 5 ainsi obtenue est mélangée au polymère organique 3 précédemment décrit, de façon à obtenir un "sol" dont le solvant est majoritairement de l'alcool. Ce mélange est effectué sous agitation mécanique et si besoin est, sous ultrasons. Le sol composite est homogène et stable. Les proportions respectives de colloïdes d'oxyde métallique ou de SiO₂ et de polymère sont comprises en masse entre 2 et 8% environ et 0,1 et 2% environ, par rapport au solvant contenant de l'alcool et de l'eau. Généralement, le solvant comprend 5 à 30% d'eau.

Comme illustré en figure 2b, le matériau à indice de réfraction élevé, ainsi obtenu, est déposé sur un support 9, sous forme d'une couche référencée 11. On désigne par le terme général "support 9" tout substrat organique ou inorganique, tels que ceux qui seront décrits ultérieurement ou toute couche optiquement active ou favorisant l'adhérence, déposée sur ledit substrat. Le dépôt de la couche 11 est effectué par exemple, par trempage, par enduction centrifuge, par enduction laminaire ou par toute autre méthode permettant d'obtenir un dépôt uniforme.

De façon avantageuse, mais non obligatoire, on intercale entre le support 9 et la couche 11, une couche de promoteur d'adhérence 13.

Enfin, la figure 2c illustre la troisième étape du procédé consistant à réaliser un traitement d'insolation UV, de la couche 11. Ce traitement UV est référencé 15. Le traitement est réalisé sous une lampe UV à vapeur de mercure, émettant dans le domaine des UV-B et UV-C (180 à 280 nm de longueur d'onde). Ce traitement permet d'obtenir une réticulation quasi-complète de l'organopolymère 3 enrobant les colloïdes 1.

Le matériau composite ainsi préparé, présente un indice de réfraction plus élevé que le même matériau sous forme colloïdale. Le tableau 1, ci-dessous, donne à titre d'exemples comparatifs, les différentes valeurs d'indice de réfraction pour certains des matériaux utilisables dans l'invention lorsqu'ils sont sous forme de couches colloïdales ou sous forme de couches de matériau composite. Le tableau 1 donne également les valeurs d'indice de réfraction des polymères seuls, utilisés dans la fabrication du matériau composite.

**Tableau 1**

| MATERIAU | INDICE DE REFRACTION |
|---|---|
| alcool polyvinylique (PVA) | 1,51 |
| polyvinylpyrrolidone (PVP) | 1,53 |
| polyvinylbutyral (PVB) | 1,49 |
| SiO₂ | 1,22 |
| Al₂O₃.H₂O | 1,44 |
| Al₂O₃.H₂O - PVA | 1,55 |
| HfO₂ | 1,55 |
| HfO₂ - PVA | 1,68 |
| ZrO₂ | 1,57 |
| ZrO₂ - PVA | 1,69 |
| ZrO₂ - PVP | 1,72 |
| TiO₂ | 1,82 |
| TiO₂ - PVP | 1,92 |

Le gain en indice de réfraction est généralement compris entre 0,10 et 0,15. On observe que la couche composite TiO₂-PVP possède un indice de réfraction plus élevé que celle de ZrO₂-PVP. En conséquence, l'emploi de ce matériau (TiO₂-PVP), dans la réalisation d'un miroir diélectrique permet de déposer un nombre de couches moins important. Cependant, il faut réserver l'emploi du composite à base de TiO₂ à des utilisations autres que les lasers. En effet, cet oxyde possède une absorption intrinsèque de l'énergie lumineuse qui limite et plafonne sa tenue au flux laser à de faibles valeurs de puissance. Le matériau composite (TiO₂-PVP) est par contre idéal pour d'autres applications (optique intégrée, lame semi-réfléchissante sur plastique), puisque lorsqu'il est associé à la silice colloïdale, il forme le couple de rapport d'indices de réfraction le plus élevé : 1,57 pour TiO₂-PVP/SiO₂ au lieu de 1,41 pour ZrO₂-PVP/SiO₂.

Le matériau optiquement actif selon l'invention comprend au moins une couche du matériau composite à indice de réfraction élevé tel que celui précédemment décrit. Plusieurs exemples particuliers de réalisation de ces matériaux optiquement actifs sont décrits ci-après. Toutefois, l'invention couvre plus largement tous les matériaux optiquement actifs comprenant non seulement une couche du matériau composite à indice de réfraction élevé mais également n'importe quelle combinaison de couches optiquement actives et de couches favorisant l'adhésion des couches entre elles, telles que celles décrites ci-après.

En fonction, de la nature des couches optiques, de leur épaisseur et de leur disposition les unes par rapport aux autres, on réalisera des matériaux antireflet ou réfléchissants.

La figure 3 illustre un exemple d'application de ce matériau à indice de réfraction élevé, dans la fabrication d'un matériau antireflet à large bande spectrale, présentant de bonnes propriétés d'hydrophobicité et de résistance à l'abrasion.

Selon les caractéristiques de l'invention, ce matériau comprend successivement :
- un substrat 17 de nature organique ou inorganique,
- une couche de promoteur d'adhérence 19 réalisée dans un matériau choisi parmi les organosiloxanes,
- une couche 21 à indice de réfraction moyen, d'un matériau comprenant un organosiloxane et un organométallique modifié par fixation de radicaux organiques,
- une couche 11 à indice de réfraction élevé, composée du matériau composite précédemment décrit,
- une couche 23 d'agent de liaison, réalisée dans un matériau choisi parmi les organosiloxanes,
- une couche 25 à faible indice de réfraction formée de colloïdes de silice, de fluorure de calcium ou de fluorure de magnésium enrobés d'un liant siloxane,
- une couche 27 d'agent de couplage, choisi dans la famille des perfluorosiloxanes, et
- une couche antiabrasive 29 d'un polymère fluoré.

Les termes indices de réfraction faible, moyen et élevé doivent être interprétés respectivement comme signifiant que l'indice est inférieur à 1,4 environ, compris entre 1,4 et 1,6 environ et supérieur à 1,6 environ.

Dans la suite de la description, le terme "substrat organique" désigne plus précisément un substrat plastique, par exemple l'un de ceux choisis parmi les polyacrylates, les polycarbonates, les polyallylcarbonates et les polyamides. Toutefois, cette liste n'est pas limitative et couvre de façon plus générale les matériaux polymères.

Le terme "substrat inorganique" couvre plus précisément un substrat vitreux, c'est-à-dire par exemple les matériaux amorphes ou même cristallins et notamment la silice, les verres borosilicates, les fluorophosphates et les phosphates.

Comparés aux substrats vitreux, les substrats plastiques sont avant tout moins coûteux, plus facilement modelables, plus légers et moins fragiles aux chocs.

La couche de promoteur d'adhérence 19 permet de réaliser la bonne adhérence de la couche 21 d'indice de réfraction moyen sur le substrat 17. Selon l'invention, on choisit ce promoteur d'adhérence parmi les organosiloxanes. Parmi ceux-ci, les époxy-alkoxysilanes sont les plus efficaces lorsque le substrat est inorganique. Lorsque le substrat est de nature organique, on préfère utiliser les γ -amino-alkylalkoxysilanes et les époxy-oxo-alkylalkoxysilanes. Il est également possible d'ajouter un catalyseur de condensation aux composés époxy-alkoxysilanes. Ainsi, le 1-méthylimidazol favorise les réactions de couplage.

Ces composés à base d'alkoxysilanes qui sont assez facilement hydrolysables doivent être dilués dans un solvant sec, plutôt aprotique avant leur utilisation. De préférence, on utilise comme solvant le butanol-1 anhydre ou le tétrahydrofurane. Toutefois, d'autres alcools aliphatiques ou des solvants tels que le toluène, les xylènes, l'hexane, l'acétonitrile ou l'acétate d'éthyle peuvent être choisis, sous réserve d'une bonne compatibilité chimique avec le substrat à traiter.

La couche 21 d'indice de réfraction moyen est préparée selon la technique "sol-gel" traduisant le terme "solution-gélatine". Plus précisément, cette couche est constituée d'un matériau appelé ORMOCER (pour "ORganically MOdified CERamic" en anglais). Ce matériau est formé de copolymères inorganiques/copolymères organiques. La fabrication de ce matériau est détaillée dans l'article de S. Amberg-Schwab et al., paru dans "High performance ceramic films and coatings" en 1991. La préparation de cette couche 21 se caractérise d'une part par l'obtention d'un réseau inorganique (oxydes) à partir d'un alkoxyde de métal de transition, modifié par fixation de radicaux organiques, et d'autre part, par la formation d'un réseau organique additionnel résultant d'une copolymérisation entre radicaux organiques.

En d'autres termes, cette couche 21 comprend un mélange d'alkoxyde métallique modifié et de méthacrylalkoxysilane. Selon un exemple de réalisation, cette couche est constituée d'un mélange d'alkoxyde de zirconium (n-propoxyde) complexé par du méthacrylate en solution dans l'alcool parent (n-propanol), avec une solution éthanolique de méthacryloxypropyltriméthoxysilane. De préférence, le mélange effectué selon une proportion molaire de 2 équivalents d'alkoxyde de zirconium modifié pour 1 équivalent de méthacryloxypropyltriméthoxysilane. Cette proportion a été choisie pour satisfaire aux critères d'indice de réfraction, de résistance mécanique du dépôt et de stabilité du mélange. Il serait également possible d'utiliser comme alkoxyde métallique : un alkoxyde de titane avec un méthacrylalkoxysilane.

Les particularités de cette couche 21 sont ses propriétés optiques et mécaniques hybrides provenant de la combinaison entre molécules organiques et inorganiques.

La couche 23 formant agent de liaison entre la couche 11 à indice de réfraction élevé et la couche 25 à indice de réfraction faible est constituée d'un matériau choisi parmi les organosiloxanes, tout comme la couche de promoteur d'adhérence 19. De préférence, on utilise un agent de liaison choisi parmi les époxyalkoxysilanes préhydrolysés contenant un catalyseur de condensation basique comme le 1-méthylimidazol. Le solvant de cet agent de liaison est un solvant sec, plutôt aprotique, par exemple le butanol-1 anhydre ou le tétrahydrofurane.

La couche 25 à faible indice de réfraction est préparée également selon la technique "sol-gel". De façon classique, cette couche 25 est issue d'une suspension de colloïdes monodispersés, d'environ 200 Å de diamètre, choisis parmi l'oxyde de silicium, le fluorure de calcium ou le fluorure de magnésium et enrobés dans un liant siloxane polymérique soluble. Les colloïdes et le liant sont synthétisés à partir d'un précurseur moléculaire. Dans l'invention, on préfère utiliser comme précurseur moléculaire de l'oxyde de silicium, le tétraéthylorthosilicate. Toutefois, on peut également utiliser le tétraméthylorthosilicate ou d'autres alkoxydes de silicium. Pour le fluorure de calcium ou le fluorure de magnésium, on utilisera comme précurseurs respectivement l'acétate de calcium et le méthoxyde de magnésium.

De préférence, cette couche 25 comprend en masse, entre 70 et 75% environ de colloïdes de silice et entre 25 et 30% environ de liant siloxane. Il est également possible d'ajouter à cette couche un tensio-actif non ionique tel qu'un alkylphénoxy-polyéthoxyéthanol. Ceci permet d'accroître la mouillabilité dudit dépôt.

La couche 27 d'agent de couplage est de préférence formée à base d'hexaméthyldisilazane dissous dans du tétrahydrofurane ou pour une plus grande efficacité est à base de 1H,1H,2H,2H-perfluorodécyltriéthoxysilane (FDTS) dilué dans du butanol-1 ou un solvant perfluoré (type Fluorinet® de 3M ou Galden® de Montedison). Toutefois, on pourrait également utiliser d'autres promoteurs du type silazanes ou perfluoroalkoxysilanes et d'autres solvants aprotiques ou anhydres.

Bien que les couches intermédiaires 19, 23, 27 de promoteur d'adhérence permettent de mieux assurer le couplage entre le substrat 17 et les couches 21, 11, 25 optiquement actives, le revêtement reste toutefois quelque peu vulnérable à une attaque mécanique. En conséquence, l'invention consiste également à protéger la couche 25 à faible indice de réfraction par une couche 29 antiabrasive réalisée de préférence dans un polymère fluoré à faible indice de réfraction. En effet, en l'absence de cette couche antiabrasive 29, la couche 27 à faible indice de réfraction reste poreuse (porosité résiduelle d'environ 48%) et est donc plus vulnérable mécaniquement qu'un film dense. On choisit de préférence parmi ces polymères fluorés, un dérivé du polytétrafluoroéthylène (PTFE) connu sous le nom commercial de Téflon AF (marque déposée), commercialisé par Du Pont de Nemours. Le PTFE est obtenu par copolymérisation du 2,2-bistrifluorométhyl-4,5-difluoro-1,3-dioxole avec le tétrafluorométhylène. Ce dérivé du PTFE possède un faible indice de réfraction (1,29) et a la particularité d'être soluble dans certains composés perfluorés tels que le Fluorinert (marque déposée), fabriqué par la Société 3M ou le GALDEN®, fabriqué par la Société MONTEDISON. Outre ses bonnes propriétés mécaniques, ce composé est hydrophobe.

Il est important de noter que les performances optiques sont déterminées par la formule de l'empilement des indices de réfraction utilisés et par l'épaisseur des couches déposées. Les bonnes performances sont également dues au choix du matériau composite à indice de réfraction élevé 11. L'élargissement de la bande spectrale est possible, tout en conservant une transmission supérieure ou égale à 98%, si l'on utilise un empilement optique quadricouche avec les mêmes matériaux et indices que ceux cités précédemment. En effet, avec un empilement du type : substrat 17/couche promoteur d'adhérence 19/couche à indice de réfraction moyen 21/couche à indice de réfraction élevé 11/couche à indice de réfraction moyen 21/couche 23 d'agent de liaison/couche 25 à indice de réfraction faible/couche 27/couche 29, dont les indices correspondent aux matériaux déjà mentionnés, on obtient un revêtement antireflet dont la largeur spectrale est d'environ 700 nm, avec une transmission supérieure ou égale à 98%, le substrat utilisé étant de nature inorganique ou organique d'indice proche de 1,5. De manière à garantir des performances de résistance mécaniques identiques à l'empilement tricouche précédent, on utilise les mêmes couches intermédiaires de promoteurs d'adhérence aux mêmes interfaces et un dépôt final de couche antiabrasive.

Les épaisseurs optiques des différentes couches déposées sont les suivantes : couche quart d'onde 21/couche demi-onde 11/couche quart d'onde 21/couche quart d'onde 25.

Le procédé de dépôt des couches successives du matériau antireflet va maintenant être décrit, en faisant référence à la figure 3.

De façon avantageuse, mais facultative, on procède tout d'abord à un nettoyage minutieux du substrat 17 avec une solution aqueuse détergente (contenant à titre d'exemple de l'eau désionisée, du Triton-X™100 ou du Rénex™690) (marques déposées). Le substrat 17 est ensuite rincé à l'eau désionisée puis à l'alcool isopropylique filtré à 0,2 micron. Lorsque le substrat 17 est de nature inorganique (vitreux), on améliore le nettoyage par une exposition contrôlée au rayonnement ultraviolet, en présence d'ozone. On obtient ainsi un substrat aux faces très hydrophiles.

L'étape suivante consiste à appliquer sur le substrat 17, la couche de promoteur d'adhérence 19, choisie parmi les alkoxysilanes. Cette couche 19 est appliquée uniformément sur le substrat 17, soit par trempage, soit par enduction centrifuge, à une vitesse comprise entre 1500 et 2000 t/min, soit par enduction laminaire. Ces deux dernières méthodes sont préférables, car elles ne nécessitent que très peu de solution traitante. Toutefois, on pourrait également utiliser d'autres techniques de dépôt. Ce type de dépôt en solution présente l'avantage par rapport à l'art antérieur de permettre le revêtement des surfaces relativement grandes avec des solutions traitantes très pures et de faible viscosité. En outre, les moyens industriels mis en oeuvre sont peu sophistiqués et peu coûteux.

Cette seconde étape est suivie d'une troisième consistant à appliquer sur la couche de promoteur d'adhérence 19, la couche 21 à indice de réfraction moyen, constituée par exemple à base de zirconium. Les techniques de dépôt utilisées sont identiques à celles précitées.

A ce moment, on procède à une quatrième étape d'insolation sous rayonnement ultraviolet afin de polymériser photochimiquement les groupements oléfines présents dans la couche 21 d'"ORMOCER".

Ensuite, la cinquième étape du procédé consiste à déposer la couche 11 à indice de réfraction élevé, préparée comme précédemment décrit puis photopolymérisée à l'aide de rayons UV.

La sixième étape du procédé consiste à déposer la couche d'agent de couplage 23, par l'une des techniques précédemment décrites.

Ensuite, la septième étape consiste à appliquer la couche 25 à faible indice de réfraction contenant de façon classique des colloïdes de silice enrobés d'un liant siloxane.

On procède alors à une huitième étape de traitement thermique aux environs de 110 à 120°C afin d'établir les ponts siloxanes et les ponts organiques entre les couches de promoteur d'adhérence 19 et 23 et les couches adjacentes 17, 21, 11 et 25.

Plus précisément, les groups silanols périphériques sont cassés pour créer des liaisons covalentes énergétiques du type silicone et les groupes organiques époxy créent des liaisons covalentes avec les terminaisons oléfines ou pyrrolidones présentes aux interfaces.

A ce stade du procédé, on obtient un substrat 17 recouvert sur ses deux faces (si le dépôt est effectué par trempage) ou sur une face (si le dépôt est effectué par centrifugation ou enduction laminaire), d'un revêtement antireflet à large bande spectrale, présentant une transmission moyenne de 99% sur plus de 300 nm de largeur (l'indice du substrat 17 étant voisin de 1,5). Un nettoyage au chiffon ordinaire est possible, sans dégrader la ou les surface(s) traitée(s). Toutefois, le revêtement antireflet reste encore fragile.

Il est en conséquence nécessaire de procéder à une étape supplémentaire consistant à déposer la couche d'agent de couplage 27, puis la couche antiabrasive 29. Cette couche 27 est déposée par trempage, épendage centrifuge ou enduction laminaire, comme cela a déjà été mentionné. On a en effet constaté que d'autres méthodes de dépôt comme la pulvérisation ou l'étalement par rouleau ou raclette donnaient des résultats médiocres quant à l'efficacité du couplage.

On revêt ensuite la couche 27 par une solution très diluée de Téflon AF (0,05 à 0,08% en masse). On procède ensuite à une ultime étape de chauffage, à une température variant entre 110 et 120°C afin de concrétiser le couplage et d'évaporer le solvant résiduel.

On donne ci-après un exemple de réalisation d'un matériau antireflet selon l'invention, réalisé avec un substrat inorganique. Les opérations de dépôt sont réalisées dans un environnement propre de classe 100 minimum (norme U.S.) et sous flux laminaire.

### Exemple 1 : réalisation d'un matériau antireflet

1) On a utilisé un substrat organique 17 en silice, d'un diamètre de 80 mm, d'une épaisseur de 12 mm et présentant un indice de réfraction de 1,46 à une longueur d'onde de 600 nm.
   Ce substrat 17 a été nettoyé avec une solution détergente composée de 0,6 ml de Triton-X 100, de 0,6 ml de Rénex 690 (marques déposées) et de 60 ml d'eau pure désionisée. Le substrat 17 a ensuite été rincé abondamment à l'eau désionisée, puis à l'alcool isopropylique filtré à 0,2 micron. Enfin, on a placé le substrat 17 dans un photoréacteur UV/ozone (de type Pr100, commercialisé par UVP, Inc.) avec un barbottage O₂/H₂O_{2,} durant un cycle de 5 minutes, de façon à rendre les faces du substrat 17 très hydrophiles.
2) On a préparé une solution A en diluant à 10% en masse du 3-glycidoxypropyltriméthoxysilane (soit 20 g) dans du butanol-1 (180g) séché sur un tamis moléculaire. Ce composé alkoxysilane est préhydrolysée au minimum pendant 16 heures, par 1,5 équivalent molaire d'eau désionisée (2,3g) et a subi, au moins 3 heures avant le dépôt, l'addition d'un catalyseur basique, à raison de 0,1 équivalent molaire de 1-méthylimidazol (0,7g).
3) On a préparé une solution B en mélangeant une solution C avec une solution D.
   La solution C correspond à un mélange de 10,6g de tétra-n-propoxyde de zirconium complexé par l'ajout de 5,57g (soit 2 équivalents molaires) d'acide méthacrylique. On obtient ainsi une solution C à 10% massique de di-n-propoxyde diméthacrylate de zirconium dans 96,3g de n-propanol.
   La solution D est une solution à 10% en masse de 40g de 3-méthacryloxypropyltriméthoxysilane dans 355g d'éthanol absolu. Cette solution D est préhydrolysée par ajout de 1,5 équivalent molaire (soit 5g) d'eau désionisée. Trente minutes avant le dépôt, on réalise le mélange dans la proportion de 2 moles de di-n-propoxyde, di-méthacrylate de zirconium (10g de solution C) pour une mole de 3-méthacryloxypropyltriméthoxysilane (3,6g de solution D) de manière à obtenir la solution B.
4) On a préparé une solution de matériau composite E en commençant par la synthèse d'un sol d'oxyde de zirconium. On dissout 129g d'oxychlorure de zirconium, octohydraté dans 600g d'eau pure désionisée, puis on y rajoute 27,6 d'urée. Cette suspension aqueuse est filtrée à 0,2 micron, puis traitée en réacteur sous pression hydrothermale à 220°C (soit une pression de vapeur de 2318 kPa), pendant une durée de 10 heures. On obtient un précipité blanc volumineux d'aspect brillant. Le pH de la liqueur surnageante est de 7 et l'on élimine cette liqueur par aspiration. Le précipité est débarrassé de ses impuretés ioniques (NH₄Cl) par trois lavages successifs à l'eau désionisée puis par centrifugation (4500 t/min pendant 10 min).
   Au terme de cette centrifugation, on replace le précipité obtenu en milieu aqueux (concentration de 20% en masse) et on dialyse pendant une nuit dans un volume de 3 litres d'eau ultra pure, à pH 6,5 environ. L'absence d'ions chlorure dans l'eau de dialyse est testée par l'ajout de 1 millilitre de solution de nitrate d'argent. Le précipité lavé est ensuite peptisé dans 100g d'eau désionisée préalablement acidifiée avec 2g d'acide chlorhydrique concentré (37%). Le sol subit alors un traitement d'ultrasonification pendant 2 heures, le pH étant de l'ordre de 2. On concentre ensuite ce sol à l'aide d'un évaporateur rotatif, jusqu'à obtenir une masse de 123g, soit un sol aqueux à 40% en oxyde de zirconium.
   On prépare également un solution aqueuse en dissolvant 10,5g de polyvinylpyrrolidone (poids moléculaire 360 000) dans 150g d'eau désionisée, chauffée à 85°C et sous agitation. Cette solution limpide renferme 7% massique de polymère polyvinylpyrrolidone. On réalise le matériau composite E à indice de réfraction élevé selon l'invention en mélangeant 745g de méthanol pur avec 124g de solution aqueuse à 7% en polymère, puis en additionnant ce mélange progressivement à 124 g de sol aqueux à 40% en oxyde ZrO₂, sous agitation. L'emploi d'ultrasons est à ce stade bénéfique pour obtenir une dispersion correcte du sol composite E qui renferme finalement 5% d'oxyde de zirconium et 0,9% de polymère dans un solvant composé de 20% d'eau pour 80% de méthanol. On filtre ce sol composite E sur un filtre en fibres de cellulose. La taille moyenne des colloïdes de ZrO₂ est déterminée par granulométrie laser et correspond à des particules de 30 nanomètres. La viscosité est de l'ordre de 3 centipoises. Avant utilisation, on rajoute 0,5ml de tensio-actif de la marque Triton-X 100, ce qui a pour effet d'améliorer l'aspect des couches réalisées.
5) On a préparé une solution F en mélangeant 2092,5 g d'éthanol absolu avec 273,42 g de tétraéthylorthosilicate distillé (167°C ; 10⁵ Pa). On a homogénéisé le mélange par agitation durant 5 minutes. On a alors ajouté lentement 72,6 g d'ammoniaque à 28% minimum, en maintenant une agitation régulière. On a laissé l'hydrolyse se produire pendant 48 heures, à 25°C. On a alors obtenu un pH d'environ 10,5. On a observé que cette solution F était devenue opalescente une fois la réaction terminée. La solution F obtenue contient des colloïdes de silice de 20 nm de diamètre environ. On a alors fait refluer le sol colloïdal afin d'éliminer l'ammoniac dissous jusqu'à obtenir un pH de 5,5 environ. Un tel mélange contient 3,3% de silice en masse.
6) On a préparé une solution G de siloxane en mélangeant 232,5 g d'éthanol absolu, 17,5 g d'eau désionisée, 1,5 g d'HCl concentré et 17 g de tétraéthylorthosilicate distillé.
7) On a mélangé 350 g de la solution F avec la totalité de la solution G afin d'obtenir une solution traitante H. On a laissé celle-ci réagir pendant 48 heures. On a alors obtenu une solution H contenant au total 2,7% de silice en masse, dont 70% sous forme colloïdale et 30% sous forme de polymères solubles, cette solution ayant un pH d'environ 1,5. On a alors filtré cette solution H sur des fibres de verre.
8) On a préparé une solution J en diluant à 3% en masse du 1H,1H,2H,2H perfluorodécyltriéthoxysilane pur dans du n-butanol anhydre.
9) On a préparé une solution K en dissolvant du fluoropolymère AF 2400 (marque déposée), (fabriqué par E.I. Du Pont de Nemours), dans un solvant perfluoré Fluorinert FC-75 (marque déposée), (fabriqué par 3M). La concentration massique en Téflon AF est de 0,075%.
10) Dans cet exemple 1, les dépôts successifs sont tous effectués par épandage centrifuge.

Sur le substrat 17 nettoyé, on a déposé en premier lieu 2 cm³ de la solution A (correspondant à la couche de promoteur d'adhérence 19), à une vitesse de rotation de 1800 t/min. On a laissé sécher pendant 1 minute, le substrat 17 étant toujours en rotation, et on a appliqué ensuite à la vitesse de 1200 t/min, 2 cm³ de la solution B (correspondant à la couche d'indice de réfraction moyen 21). Le séchage de cette dernière couche a pris 90 secondes tout en conservant la rotation. On a alors insolé sous UV-B le substrat 17 ainsi traité pendant une durée de 5 minutes, en évitant la formation d'ozone par un balayage gazeux (d'azote par exemple).

Ensuite, on a déposé sur ledit substrat 2 cm³ de la solution E (correspondant à la couche à indice de réfraction élevé 11), à 600 t/min. Le temps de séchage est de 90 secondes en conservant la rotation. Puis on insole le substrat ainsi traité sous UV-C pendant 10 minutes, sous balayage gazeux.

On a alors appliqué 2 cm³ de la solution A (correspondant à la couche 23 d'agent de couplage), à une vitesse de 1800 t/min, en prolongeant la rotation pendant 1 minute. Ce dépôt est immédiatement suivi d'une application de 2 cm³ de la solution H (correspondant à la couche à faible indice de réfraction 25), à 1300 t/min, en conservant la rotation pendant 90 secondes. On a alors chauffé ce substrat 17 ainsi recouvert, à 120°C pendant 30 minutes. Ensuite, après refroidissement, on a déposé sur le substrat 2 cm³ de solution J (correspondant à la couche 27 d'agent de couplage), par enduction centrifuge à 1800 t/min, en conservant la rotation pendant 1 minute.

On a en outre appliqué, à deux reprises, 2 cm³ de solution K (correspondant à la couche antiabrasive 29), à la vitesse de 1500 t/min en séchant à l'air pendant 90 secondes (en rotation). Enfin, on a traité le revêtement obtenu, à 120°C, pendant 15 minutes.

Les épaisseurs mécaniques déposées sont dans ce cas respectivement de 98, 174 et 115 nanomètres pour les couches optiques 21, 11 et 25 (figure 3). Ainsi, l'épaisseur totale d'un tel revêtement est de l'ordre de 0,4 micron.

### Propriétés optiques du matériau antireflet préparé selon l'exemple 1 précité.

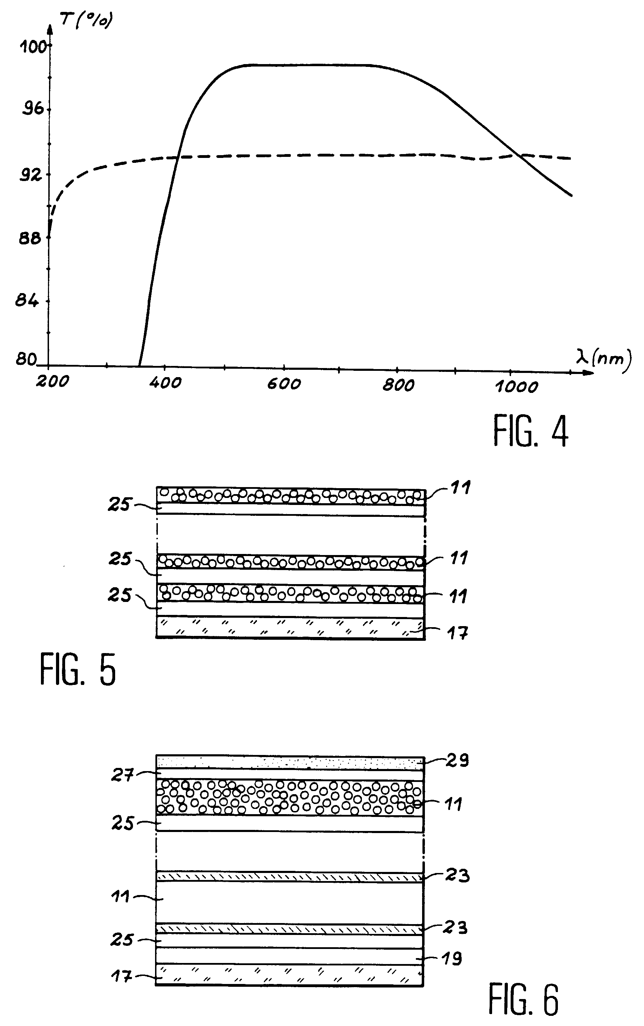

Le substrat vitreux 17 ainsi traité sur ses deux faces révèle par spectrophotométrie, les facteurs de transmission suivants (voir figure 4) :
T = 99,0% ± 0,2 à λ = 750 nm
T = 98,8% ± 0,2 à λ = 650 nm
T = 99,2% ± 0,2 à λ = 550 nm.

La courbe en trait plein représente les résultats obtenus avec le matériau antireflet de l'exemple précité, tandis que la courbe en pointillés illustre, à titre comparatif, les résultats obtenus avec un substrat en silice nue.

### Propriétés mécaniques du matériau antireflet préparé selon l'exemple 1 précité.

Le revêtement antireflet selon l'invention correspondant à l'exemple ci-dessus a été testé, en ce qui concerne ses propriétés de résistance mécanique. Les résultats sont donnés ci-après :
**Test 1 :** Après 10 essuyages de type "Drag Wipe", c'est-à-dire avec un papier buvard imbibé d'éthanol, plaqué sur la surface du substrat revêtu, puis tiré régulièrement, on n'a observé aucun dégat sous microscope Reichert MEF 3x50.
**Test 2 :** Après 10 essuyages manuels avec un chiffon doux (chiffon 4012 provenant de chez International Clean Products Inc.), imbibé d'éthanol, on n'a observé également aucun dégat.
**Test 3 :** Après 10 essuyages manuels avec un chiffon identique à celui du test 2, mais sec, aucun dégat n'a été observé.
**Test 4 :** Enfin, après collage et arrachage d'un ruban adhésif du type Scotch Magic (marque déposée, fabriqué par Scotch Inc.), on n'a également observé aucun dégat.
**Test 5 :** Après 5 cycles de gommage avec une gomme translucide, on n'a observé aucun dégat.

### Propriétés de résistance climatique du matériau antireflet préparé selon l'exemple 1 précité.

Les propriétés de résistance climatique du matériau antireflet ont également été testées. On a pu constater qu'il n'y avait pas de mouillabilité par l'eau, même salée. Ceci signifie que, le revêtement du substrat 17 est fortement hydrophobe. Par ailleurs, après avoir laissé le matériau antireflet pendant 24 heures à 25°C, sous une humidité relative de 96%, aucun dégat n'a été observé. Enfin, on a pu noter un début d'attaque du revêtement selon l'invention après un séjour de 60 minutes dans de l'eau désionisée portée à ébullition, à une pression de 1 atm. (10⁵ Pa). Toutefois, le pouvoir antireflet reste intact.

### Propriétés de tenue au flux laser du matériau antireflet préparé selon l'exemple 1 précité.

Enfin, on a également effectué des tests de tenue au flux laser. Le seuil d'endommagement des substrats plastiques selon l'invention, est en fait limité par la résistance intrinsèque du substrat à l'action du laser. Sur un substrat en silice, le revêtement antireflet selon l'invention supporte des densités d'énergie de 21 à 25 J/cm² pour une durée d'impulsion de 3 nanosecondes, à une longueur d'onde de 1064 nm (proche infrarouge). En conséquence, le seuil d'endommagement est 2 à 3 fois supérieur à ceux des substrats traités selon l'art antérieur. Des mesures complémentaires effectuées à une longueur d'onde de 530 nm (visible) avec une durée d'impulsion de 10 nanosecondes, ont montré un seuil d'endommagement supérieur à 12 J/cm².

La figure 5 illustre un deuxième exemple de matériau optiquement actif, à savoir un matériau réfléchissant à large bande spectrale.

Selon les caractériques de l'invention, ce matériau comprend un substrat 17 de nature organique ou inorganique, sur lequel est déposé au moins un ensemble de deux couches, à savoir :
- une couche 25 à faible indice de réfraction, et
- une couche 11 à indice de réfraction élevé.

Le substrat 17 et les couches 25 et 11 sont identiques à ceux décrits dans la réalisation du matériau antireflet.

Le procédé de dépôt des couches successives du matériau réfléchissant va maintenant être décrit en faisant référence à la figure 5.

De façon avantageuse, mais facultative, le substrat de nature organique ou inorganique est d'abord soumis à un nettoyage méticuleux, tel que celui décrit dans la réalisation du matériau antireflet.

On dépose ensuite sur le substrat 17 nettoyé, une première couche 25 à faible indice de réfraction selon l'une des techniques de dépôt en solution déjà citées (trempage, enduction centrifuge ou enduction laminaire). Le solvant de la suspension étant avantageusement choisi parmi les alcools aliphatiques, le temps de séchage est relativement court (quelques minutes) et l'on peut procéder au dépôt de la couche 11 à indice de réfraction élevé. Après séchage, on soumet cette couche composite à une étape de photopolymérisation UV-C, de manière à obtenir une réticulation quasi-complète du polymère. Ceci est une étape nécessaire à la poursuite de l'empilement puisqu'en l'absence d'insolation UV, le polymère reste partiellement soluble dans les alcools et perturbe donc le dépôt subséquent. Ensuite, on répète les opérations de dépôt précitées autant de fois que nécessaire pour obtenir la réflectivité voulue.

Le matériau réfléchissant qui vient d'être décrit présente des performances optiques satisfaisantes et des propriétés de résistance à l'abrasion correctes. On peut cependant encore parfaire la tenue mécanique du revêtement en utilisant des agents de couplage entre les couches optiquement actives ainsi qu'en terminant l'empilement par une couche antiabrasive. Ce deuxième type de matériau réfléchissant est détaillé ci-après en faisant référence à la figure 6.

Ce matériau réfléchissant comprend un substrat 17 de nature organique ou inorganique sur lequel est déposé :
- une couche de promoteur d'adhérence 19 choisi parmi les organosilanes,
- au moins un ensemble des quatre couches suivantes :
   - une couche 25 à faible indice de réfraction,
   - une couche 23 d'agent de liaison,
   - une couche 11 à indice de réfraction élevé, et
   - une couche 23 d'agent de laison.

Lors du dépôt du dernier ensemble de quatre couches, la dernière couche d'agent de liaison est toutefois supprimée. On termine la réalisation de ce matériau réfléchissant en déposant :
- une couche 27 de promoteur d'adhérence, et
- une couche 29 antiabrasive réalisée en polymère fluoré.

Les matériaux et les techniques de dépôt sont identiques à ceux précédemment décrits dans les autres procédés.

On donne ci-après deux exemples de réalisation d'un matériau réfléchissant selon l'invention. Le premier exemple concerne la réalisation d'un miroir dans le domaine du proche infrarouge, sur un substrat inorganique, sans propriétés de résistance à l'abrasion particulières. Le second concerne la réalisation d'une lame semi-réfléchissante dans le visible, formée sur un substrat plastique et présentant des propriétés accrues de résistance et d'hydrophobicité.

Ces opérations de dépôt sont réalisées dans un environnement propre de classe 100 minimum (norme U.S.) et sous flux laminaire.

### Exemple 2 : réalisation d'un matériau réfléchissant

1) On a utilisé un substrat inorganique 17 en verre (glace blanche B270 commercialisée par Schott), d'une surface de 200 x 200 mm² et d'une épaisseur de 6 mm. Son indice de réfraction est de 1,52 à une longueur d'onde de 600 nm et sa qualité de polissage est de 3λ (λ=1,06 micron).
   Ce substrat 17 a été nettoyé avec une solution détergente composée de 0,6 ml de Triton-X 100, de 0,6 ml de Rénex 690 (marques déposées) et de 60 ml d'eau pure désionisée. Le substrat 17 a ensuite été rincé abondamment à l'eau désionisée, puis à l'alcool isopropyle filtré à 0,2 micron. Enfin, on a placé le substrat 17 dans un photoréacteur UV/ozone (de type PR 100, commercialisé par UVP Inc.), avec un barbottage O₂/H₂O_{2,} durant un cycle de 5 minutes, de façon à rendre les faces du substrat 17 très hydrophiles.
2) On a préparé un sol de silice colloïdale A' en mélangeant 1046,3 g d'éthanol absolu avec 136,7 g de tétraéthylorthosilicate distillé (167°C, 10⁵Pa). On a homogénéisé le mélange par agitation durant 5 minutes. Tout en maintenant cette agitation, on a additionné alors 36,3 g d'ammoniaque à 28% minimum. La réaction d'hydrolyse et de condensation nécessite un minimum de 48h, à 25°C pour être complète. Il survient alors une opalescence qui témoigne de la formation de colloïdes de silice. La mesure granulométrique effectuée révèle un diamètre moyen des colloïdes de 21 ± 9 nm. Le pH final de ce sol est d'environ 10,5 et la concentration massique en SiO₂ est de 3,2%. Avant utilisation, le sol de silice A' est filtré à 0,2 micron.
3) On a préparé un sol composite B' de la même façon que l'on a préparé la solution E dans l'exemple 1.
4) Dans cet exemple 2, le dépôt des couches successives est avantageusement réalisé par enduction laminaire. On procède au dépôt sur le substrat 17 d'une première couche de solution A' (correspondant à la couche 25 à faible indice de réfraction), puis après séchage de celle-ci, on applique un dépôt de matériau composite B' (ZrO₂-PVP), (correspondant à la couche 11 à indice de réfraction élevé).

Après séchage de cette deuxième couche, on insole ledit substrat 17 pendant 10 minutes sous UV-C (180 à 280 nm de longueur d'onde), en évitant la formation d'ozone au contact du polymère, par un balayage gazeux (d'azote par exemple). On répète la séquence précédente pendant 8 fois encore, de manière à obtenir finalement un substrat 17 traité sur une face avec un revêtement comportant 18 couches, soit 9 paires (SiO₂/ZrO₂-PVP).

### Propriétés optiques du matériau réfléchissant préparé selon l'exemple 2 précité.

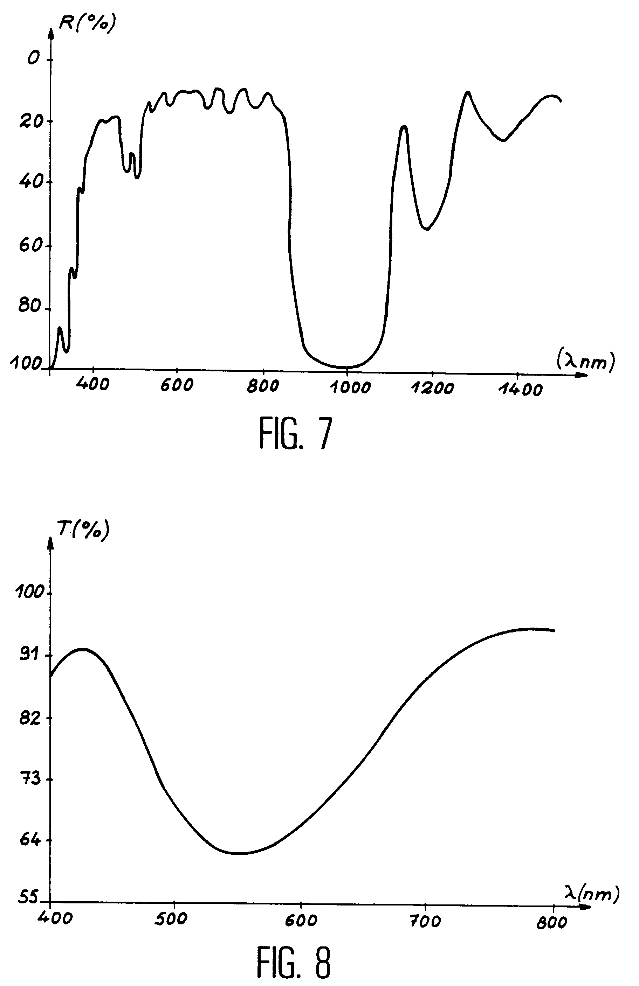

Le substrat 17 ainsi traité révèle par spectrophotométrie, les facteurs de réflexion suivants (voir figure 7) :
- incidence normale : R=99% à λ=980 nm,
- avec une largeur spectrale de 100 nm, soit ± 50 nm autour de 980 nm : R>98%.

### Propriétés mécaniques du matériau réfléchissant préparé selon l'exemple 2 précité.

Le fait d'avoir comme couche externe, un dépôt composite qui a subi une étape d'assistance à la photopolymérisation, confère au miroir des propriétés intéressantes de résistance à l'abrasion. En effet, ce miroir est essuyable à plusieurs reprises manuellement avec un chiffon doux (réf. 4012 de chez International Clean Products Inc.) imbibé d'éthanol ou sec. Aucun dégat n'a été observé.

### Propriétés de tenue au laser du matériau réfléchissant préparé selon l'exemple 2 précité.

Les mesures de tenue au flux laser effectuées sur ce miroir infrarouge révèlent des seuils d'endommagement variant de 14 à 18J/cm² pour une durée d'impulsion de 3 nanosecondes, à la longueur d'onde de 1,05 micron.

### Exemple 3 : réalisation d'un matériau réfléchissant présentant des propriétés de résistance accrue à l'abrasion

1) On a utilisé un substrat organique en polyallylcarbonate (dénomination CR 39, marque déposée) d'un diamètre de 80 mm, d'une épaisseur de 2 mm et présentant un indice de réfraction de 1,50 à une longueur d'onde de 600 nm.
   Ce substrat a été nettoyé avec une solution détergente identique à celle utilisée dans l'exemple 2 et rincé abondamment à l'eau désionisée, puis à l'alcool isopropylique filtré à 0,2 micron.
2) On a préparé une solution C' identique à la solution H de l'exemple 1.
3) On a préparé une solution D' en mélangeant 940 g d'eau désionisée avec 2,95 g d'acide chlorhydrique concentré (à 37% en masse). Le pH de cette solution est de 1,5. On ajoute à cette solution acide 63,35 g de tétraisopropoxyde de titane sous agitation. Un précipité blanchâtre apparaît. Le rapport molaire (HCl/Ti) est de 0,13. Cette suspension est laissée sous agitation à température ambiante pendant une période de 15 jours. Durant cette période, la peptisation des colloïdes d'oxyde de titane est réalisée. Le sol résultant est alors concentré à l'aide d'un évaporateur rotatif, sous pression réduite, jusqu'à obtenir une concentration de 30% en masse de TiO₂ (au lieu de 1,8% initialement).
   Ensuite, on prépare une solution E' qui contient 2,5g de polyvinylpyrrolidone (poids moléculaire 360 000) dissous, sous agitation, dans 384g de méthanol pur. Cette solution E' limpide renferme 0,65% massique de polyvinylpyrrolidone. On réalise le sol composite D' en mélangeant la solution E' au sol aqueux concentré à 30% en TiO₂, sous agitation et ultrasons. Le sol composite D' est alors homogène et renferme 4% en masse d'oxyde de titane colloïdal et 0,5% de polymère (soit un rapport massique (PVP/TiO₂) de 13%), dans un solvant composé de 90% de méthanol pour 10% d'eau. Le pH est de l'ordre de 3. On filtre ce sol composite D' sur un filtre en fibres de cellulose. Avant l'utilisation, on rajoute 0,5 ml de tensioactif de la marque Triton-X 100, ce qui a pour effet d'améliorer l'aspect des couches déposées.
4) On a préparé une solution F' en diluant à 4% en masse du 3-glycidoxypropyltriméthoxysilane (soit 4g) dans 96g de butanol-1 anhydre (préalablement séché sur un tamis moléculaire).
5) On a préparé une solution G' identique à la solution J de l'exemple 1.
6) On a préparé une solution H' identique à la solution K de l'exemple 1.
7) Dans cet exemple 3, les dépôts successifs sont tous effectués par enduction centrifuge.

Sur le substrat nettoyé, on a déposé en premier lieu 2 cm³ de la solution F', à une vitesse de rotation de 1500 t/min. On a laissé sécher pendant 1 minute, le substrat étant toujours en rotation, et on a appliqué ensuite la vitesse de 1400 t/min, 2 cm³ de la solution C'. Le séchage de cette dernière couche a pris 90 secondes, tout en maintenant la rotation. On a alors chauffé le substrat traité à 120°C pendant 15 minutes.

Après refroidissement, on a déposé à nouveau 2 cm³ de la solution F', à la vitesse de 1500 t/min, en laissant sécher celle-ci pendant 1 minute en rotation. Puis immédiatement après, on a appliqué 2 cm³ de la solution D', à la vitesse de 1700 t/min. Le temps de séchage de cette dernière couche est de 90 secondes, en rotation. On a alors insolé le substrat ainsi traité sous UV-C pendant 10 minutes et sous balayage gazeux.

Ensuite, on a déposé une couche de la solution F' (2 cm³), à la vitesse de 1500 t/min, suivie 1 minute plus tard d'un dépôt de la solution G' (2 cm³) à la vitesse de 1400 t/min. En conservant cette vitesse de rotation à 1400 t/min, on dépose après 1 minute et à deux reprises 2 cm³ de la solution H', en séchant à l'air (en rotation), pendant 90 secondes entre chaque application. Enfin, on a traité le revêtement obtenu, pendant 30 minutes à 120°C.

### Propriétés optiques du matériau réfléchissant préparé selon l'exemple 3 précité

Le substrat plastique ainsi traité sur une face révèle par spectrophotométrie, les facteurs de transmission suivants (voir figure 8) :
T=63,5% à λ=550 nm,
T=68,0% à λ=500 nm,
T=66,2% à λ=600 nm.

La réflexion maximale d'un tel empilement bicouche (SiO₂/TiO₂-PVP) est donc de 36% dans le spectre visible (550 nm).

### Propriétés mécaniques du matériau réfléchissant préparé selon l'exemple 3 précité.

Le substrat plastique semi-réfléchissant de l'exemple 3 a été testé en ce qui concerne ses propriétés de résistance mécanique. Les tests 1 à 5 de l'exemple 1 ont été reproduits à l'identique sur le matériau semi-réfléchissant. Aucun dommage n'a été observé.

De plus, on observe un comportement satisfaisant du matériau dans le temps. En d'autres termes, on n'observe pas de délamination du revêtement réfléchissant après plusieurs mois ou après essais de torsions répétés du substrat plastique (dans sa limite de flexibilité).

### Propriétés de résistance climatique du matériau réfléchissant préparé selon l'exemple 3 précité.

On a pu constater qu'il n'y avait pas de mouillabilité par l'eau, même salée. Ceci signifie que le revêtement réfléchissant est fortement hydrophobe. Par ailleurs, après avoir laissé le matériau réfléchissant pendant 24 heures à 25°C, sous une humidité relative de 96%, aucun dégât n'a été observé.

## Revendications

1. Matériau composite (11) à indice de réfraction élevé, comprenant une phase minérale constituée uniquement de colloïdes (1) d'oxyde de métal ou de SiO₂, et une phase organique constituée d'un polymère polyvinylique (3) soluble dans un solvant contenant de l'alcool et de l'eau, ledit polymère étant choisi parmi les polyvinylpyrrolidones et les alcools polyvinyliques, le matériau comprenant en masse de 60 à 99% de colloïdes et entre 1 et 40% de polymère, caractérisé en ce que lesdits colloïdes sont enrobés dans ledit polymère polyvinylique, ledit polymère ayant été réticulé de manière quasi-complète par un traitement d'insolation aux rayons ultraviolets.

2. Matériau composite selon la revendication 1, caractérisé en ce que les colloïdes (1) d'oxyde métallique sont des colloïdes d'oxydes choisis parmi l'oxyde de scandium, l'oxyde d'yttrium, l'oxyde de lanthane, l'oxyde de titane, l'oxyde de zirconium, l'oxyde de hafnium, l'oxyde de thorium, l'oxyde de niobium, l'oxyde de tantale ou l'oxyde d'aluminium.

3. Procédé de fabrication et de dépôt du matériau composite (11) selon l'une des revendications 1 et 2, le procédé comprenant les étapes consistant à :
- préparer une suspension desdits colloïdes d'oxyde métallique ou de SiO₂ (1) dispersés dans un alcool aliphatique,
- mélanger cette suspension colloïdale avec ledit polymère polyvinylique (3) soluble dans un solvant contenant de l'alcool et de l'eau,
- déposer le mélange obtenu sur un support (9) de façon à former une couche uniforme (11), et
- faire réticuler cette couche (11) par un traitement d'insolation (15) aux rayons ultraviolets ayant une longueur d'onde comprise entre 180 et 280 nm environ.

4. Procédé selon la revendication 3, dans lequel le mélange de la suspension colloïdale avec le polymère polyvinylique comprend, en masse, entre 3 et 8% environ de colloïdes d'oxyde métallique ou de SiO₂ et entre 0,1 et 2% environ de polymère polyvinylique par rapport au solvant contenant l'alcool et l'eau.

5. Matériau optiquement actif, comprenant un substrat de nature organique ou inorganique (17) recouvert par au moins une couche du matériau composite (11) à indice de réfraction élevé selon l'une quelconque des revendications 1 à 2.

6. Matériau optiquement actif selon la revendication 5, comprenant, outre ledit substrat (17) et ladite couche (11) à indice de réfraction élevé, au moins une couche choisie parmi :
- une couche à faible indice de réfraction (25), formée de colloïdes d'oxyde de silicium, de fluorure de calcium ou de fluorure de magnésium, enrobés d'un liant siloxane,
- une couche à indice de réfraction moyen (21), formée d'un matériau comprenant un organosiloxane et un organométallique modifié par fixation de radicaux organiques,
- une couche de promoteur d'adhérence (19) réalisée dans un matériau choisi parmi les organosiloxanes et favorisant l'adhérence entre le substrat (17) et une desdites couches à indice de réfraction élevé (11), faible (25) ou moyen (21),
- une couche d'agent de liaison (23), réalisée dans un matériau choisi parmi les organosiloxanes et favorisant la liaison entre lesdites couches à indice de réfraction élevé (11), faible (25) ou moyen (21),
- une couche (27) d'un agent de couplage choisi parmi les perfluorosiloxanes et les silazanes, ou
- une couche antiabrasive (29) à base de polymère fluoré.

7. Matériau optiquement actif selon la revendication 6, présentant des propriétés antireflet à large bande spectrale, d'hydrophobicité et de résistance à l'abrasion, et comprenant ledit substrat (17) de nature organique ou inorganique recouvert successivement par :
- ladite couche de promoteur d'adhérence (19),
- ladite couche à indice de réfraction moyen (21),
- ladite couche à indice de réfraction élevé (11),
- ladite couche (23) d'agent de liaison,
- ladite couche à faible indice de réfraction (25),
- ladite couche (27) d'agent de couplage, et
- ladite couche antiabrasive (29).

8. Matériau optiquement actif selon la revendication 6, présentant des propriétés réfléchissantes, et comprenant ledit substrat (17) de nature organique ou inorganique recouvert successivement d'au moins un ensemble de deux couches comprenant :
- ladite couche à faible indice de réfraction (25), et
- ladite couche à indice de réfraction élevé (11).

9. Matériau optiquement actif selon la revendication 6, présentant des propriétés réfléchissantes et de résistance à l'abrasion, et comprenant ledit substrat (17) de nature organique ou inorganique recouvert successivement par :
- ladite couche de promoteur d'adhérence (19),
- au moins un ensemble des trois couches suivantes :
- ladite couche à faible indice de réfraction (25),
- ladite couche d'agent de liaison (23), et
- ladite couche à indice de réfraction élevé (11),
la couche d'agent de liaison (23) étant disposée entre chaque ensemble de trois couches successif,
- ladite couche de promoteur d'adhérence (27), et
- ladite couche antiabrasive (29).

10. Matériau optiquement actif selon la revendication 6, 7 ou 9, dans lequel le substrat (17) est inorganique et la couche de promoteur d'adhérence (19) est en époxy-alkoxysilane.

11. Matériau optiquement actif selon la revendication 6, 7 ou 9, dans lequel le substrat (17) est organique et la couche de promoteur d'adhérence (19) est en γ-amino-alkoxysilane ou en époxy-oxo-alkoxysilane.

12. Matériau optiquement actif selon la revendication 6 ou 7, dans lequel la couche à indice de réfraction moyen (21) est formée d'un matériau comprenant un alkoxyde de zirconium ou de titane et du méthacryloxypropyltriméthoxysilane.

13. Matériau optiquement actif selon la revendication 6, 7 ou 9, dans lequel la couche d'agent de liaison (23) est choisie parmi les époxyalkoxysilanes préhydrolysés contenant un catalyseur de condensation basique.

14. Matériau optiquement actif selon la revendication 6, 7 ou 9, dans lequel la couche d'agent de couplage (27) est choisie parmi l'hexaméthyldisilazane ou le 1H,1H,2H,2H-perfluorodécyltriéthoxysilane.

15. Matériau optiquement actif selon la revendication 6, 7 ou 9, dans lequel la couche antiabrasive (29) est en polytétrafluoroéthylène.

## Patentansprüche

1. Verbundmaterial (11) mit hohem Brechungsindex, enthaltend eine mineralische Phase, die lediglich aus Kolloiden (1) von Metalloxid oder von SiO₂ besteht, und eine organische Phase, die aus einem Vinylpolymer (3) besteht, das in einem Lösungsmittel, welches Alkohol und Wasser enthält, löslich ist, wobei das genannte Polymer unter den Polyvinylpyrrolidonen und den Polyvinylalkoholen gewählt ist und das Verbundmaterial in seiner Masse 60 bis 99% Kolloide und zwischen 1 und 40% Polymer enthält,
dadurch gekennzeichnet, daß die genannten Kolloide in das genannten Vinylpolymer eingebettet sind, wobei das genannte Polymer durch eine Bestrahlungsbehandlung mit ultravioletten Strahlen nahezu vollständig vernetzt wurde.

2. Verbundmaterial nach Anspruch 1, dadurch gekennzeichnet, daß die Kolloide (1) von Metalloxid Kolloide von Oxiden sind, die unter Scandiumoxid, Yttriumoxid, Lanthanoxid, Titanoxid, Zirconiumoxid, Hafniumoxid, Thoriumoxid, Nioboxid, Tantaloxid oder Aluminiumoxid gewählt sind.

3. Verfahren zur Herstellung und Abscheidung des Verbundmaterials (11) nach einem der Ansprüche 1 und 2, wobei das Verfahren die Schritte umfaßt, die darin bestehen:
- eine Suspension der genannte Kolloide (1) von Metalloxid oder von SiO₂, in einem aliphatischen Alkohol dispergiert, herzustellen,
- diese kolloidale Suspension mit dem genannten Vinylpolymer (3), das in einem Alkohol und Wasser enthaltenden Lösungsmittel löslich ist, zu vermischen,
- die erhaltene Mischung auf einem Träger (9) so abzuscheiden, daß eine gleichförmige Schicht (11) gebildet wird, und
- diese Schicht (11) durch eine Bestrahlungsbehandlung (15) mit ultravioletten Strahlen, die eine Wellenlänge ungefähr zwischen 180 und 280 nm haben, zu vernetzen.

4. Verfahren nach Anspruch 3, in dem die Mischung der kolloidalen Suspension mit dem Vinylpolymer in ihrer Masse, bezogen auf das Alkohol und Wasser enthaltende Lösungsmittel, ungefähr zwischen 3 und 8% Kolloide von Metalloxid oder von SiO₂ und ungefähr zwischen 0,1 und 2% Vinylpolymer enthält.

5. Optisch wirksames Material, umfassend ein Substrat organischer oder anorganischer Natur (17), das mit mindestens einer Schicht von Verbundmaterial (11) mit hohem Brechungsindex nach einem der Ansprüche 1 bis 2 bedeckt ist.

6. Optisch wirksames Material nach Anspruch 5, welches über das genannte Substrat (17) und die genannte Schicht mit hohem Brechungsindex (11) hinaus mindestens eine Schicht umfaßt, die gewählt ist unter:
- einer Schicht mit niedrigem Brechungsindex (25), gebildet aus Kolloiden von Siliciumoxid, Calciumfluorid oder Magnesiumfluorid, eingebettet in ein Siloxan-Bindemittel,
- einer Schicht mit mittlerem Brechungsindex (21), gebildet aus einem Material, welches ein Organosiloxan und eine durch Fixierung organischer Reste modifizierte metallorganische Verbindung umfaßt,
- einer Schicht von Haftvermittler (19), hergestellt aus einem Material, das unter den Organosiloxanen gewählt ist und das die Haftung zwischen dem Substrat (17) und einer der genannten Schichten mit hohem (11), niedrigem (25) oder mittlerem (21) Brechungsindex fördert,
- einer Schicht von Verbindungsmittel (23), ausgeführt in einem Material, das unter den Organosiloxanen gewählt ist und das die Verbindung zwischen den genannten Schichten mit hohem (11), niedrigem (25) oder mittlerem (21) Brechungsindex fördert,
- einer Schicht eines Kopplungsmittels (27), das unter den Perfluorsiloxanen und den Silazanen gewählt ist, oder
- einer abrasionshemmenden Schicht (29) auf der Basis von Fluorpolymer.

7. Optisch wirksames Material nach Anspruch 6, welches antireflektierende Eigenschaften für ein breites Spektralband, Eigenschaften der Hydrophobie und Eigenschaften der Abrasionsbeständigkeit aufweist und welches das genannte Substrat (17) organischer oder anorganischer Natur umfaßt, das nacheinander bedeckt ist mit:
- der genannten Schicht von Haftvermittler (19),
- der genannten Schicht mit mittlerem Brechungsindex (21),
- der genannten Schicht mit hohem Brechungsindex (11),
- der genannten Schicht von Verbindungsmittel (23),
- der genannten Schicht mit niedrigem Brechungsindex (25),
- der genannten Schicht von Kopplungsmittel (27) und
- der genannten abrasionshemmenden Schicht (29).

8. Optisch wirksames Material nach Anspruch 6, welches reflektierende Eigenschaften aufweist und welches das genannte Substrat (17) von organischer oder anorganischer Natur umfaßt, das nacheinander bedeckt ist mit mindestens einer Anordnung von zwei Schichten, umfassend:
- die genannte Schicht mit niedrigem Brechungsindex (25) und
- die genannte Schicht mit hohem Brechungsindex (11).

9. Optisch wirksames Material nach Anspruch 6, welches reflektierende Eigenschaften und Eigenschaften der Abrasionsbeständigkeit aufweist und welches das genannte Substrat (17) organischer oder anorganischer Natur umfaßt, das nacheinander bedeckt ist mit:
- der genannten Schicht von Haftvermittler (19),
- mindestens einer Anordnung der drei folgenden Schichten:
- der genannten Schicht mit niedrigem Brechungsindex (25),
- der genannten Schicht von Verbindungsmittel (23) und
- der genannten Schicht mit hohem Brechungsindex (11),
wobei die Schicht von Verbindungsmittel (23) zwischen jeder Anordnung von drei aufeinanderfolgenden Schichten angeordnet ist,
- der genannten Schicht von Haftvermittler (27) und
- der genannten abrasionshemmenden Schicht (29).

10. Optisch wirksames Material nach Anspruch 6, 7 oder 9, in welchem das Substrat (17) anorganisch ist und die Schicht von Haftvermittler (19) aus Epoxy-alkoxysilan ist.

11. Optisch wirksames Material nach Anspruch 6, 7 oder 9, in welchem das Substrat (17) organisch ist und die Schicht von Haftvermittler (19) aus γ-Amino-alkoxysilan oder aus Epoxy-oxo-alkoxysilan ist.

12. Optisch wirksames Material nach Anspruch 6 oder 7, in welchem die Schicht mit mittlerem Brechungsindex (21) aus einem Material gebildet ist, das ein Zirconium- oder Titanalkoholat und Methacryloxypropyltrimethoxysilan umfaßt.

13. Optisch wirksames Material nach Anspruch 6, 7 oder 9, in welchem die Schicht von Verbindungsmittel (23) gewählt ist unter den vorhydrolysierten Epoxyalkoxysilanen, die einen basischen Kondensationskatalysator enthalten.

14. Optisch wirksames Material nach Anspruch 6, 7 oder 9, in welchem die Schicht von Kopplungsmittel (27) unter Hexamethyldisilazan oder 1H,1H,2H,2H-Perfluordecyltriethoxysilan gewählt ist.

15. Optisch wirksames Material nach Anspruch 6, 7 oder 9, in welchem die abrasionshemmende Schicht (29) aus Polytetrafluorethylen ist.

## Claims

1. Composite material (11) having a high refractive index, comprising a mineral phase constituted solely by SiO₂ or metal oxide colloids (1) and an organic phase constituted by a polyvinyl polymer (3) soluble in a solvent containing alcohol and water, said polymer being chosen from among polyvinyl pyrrolidones and polyvinyl alcohols, said material comprising by weight 60 to 99% colloids and between 1 and 40% polymer, characterized in that said colloids are coated by said polyvinyl polymer, said polymer having been quasi-completely crosslinked by an ultraviolet ray insolation treatment.

2. Composite material according to claim 1, characterized in that the metal oxide colloids (1) are oxide colloids chosen from among scandium oxide, yttrium oxide, lanthanum oxide, titanium oxide, zirconium oxide, hafnium oxide, thorium oxide, niobium oxide, tantalum oxide and aluminium oxide.

3. Process for the production and deposition of the composite material (11) according to either of the claims 1 and 2, the process comprising stages consisting of:
- preparing a suspension of said SiO₂ or metal oxide colloids (1) dispersed in an aliphatic alcohol,
- mixing said colloidal suspension with said polyvinyl polymer (3) soluble in a solvent containing alcohol and water,
- depositing the mixture obtained on a support (9) so as to form a uniform coating (11) and
- crosslinking said coating (11) by an irradiation treatment (15) with ultraviolet rays having a wavelength between approximately 180 and 280 nm.

4. Process according to claim 3, wherein the mixture of the colloidal suspension with the polyvinyl polymer comprises, by weight, between approximately 3 and 8% SiO₂ metal oxide colloids and between approximately 0.1 and 2% polyvinyl polymer, with respect to the solvent containing the alcohol and the water.

5. Optically active material, comprising an organic or inorganic substrate (17) covered by at least one composite material coating (11) having a high refractive index, according to either of the claims 1 and 2.

6. Optically active material according to claim 5, comprising besides said substrate (17) and said high refractive index coating (11), at least one coating chosen from among:
- a low refractive index coating (25), formed from silicon dioxide, calcium fluoride or magnesium fluoride colloids coated with a siloxane binder,
- an average refractive index coating (21) formed from a material incorporating an organosiloxane and an organometallic material modified by the fixing or organic radicals,
- an adhesion promoting coating (19) formed from a material chosen among the organosiloxanes and favouring adhesion between the substrate (17) and one of said high (11), low (25) or average (21) refractive index coatings,
- a bonding agent coating (23) produced in a material chosen from among organosiloxanes and favouring bonding between said high (11), low (25) or average (21) refractive index coatings,
- a coating (27) of a coupling agent chosen from among perfluorosiloxanes and silazanes or
- an antiabrasive coating (29) based on a fluorine polymer.

7. Optically active material according to claim 6, having wide spectral band antireflection, water repelling and abrasion resistance properties, and comprising said organic or inorganic substrate successively covered by:
- said adhesion promoting coating (19),
- said average refractive index coating (21),
- said high refractive index coating (11),
- said bonding agent coating (23),
- said low refractive index coating (25),
- said coupling agent coating (27) and
- said antiabrasive coating (29).

8. Optically active material according to claim 6, having reflecting properties, and comprising said organic or inorganic substrate (17) successively covered by at least one group of two coatings comprising said low refractive index coating (25) and said high refractive index coating (11).

9. Optically active material according to claim 6, having reflecting and abrasion resisting properties, and comprising said organic or inorganic substrate (17) successively covered by an adhesion promoting coating (19) and at least one group of the three following coatings:
- said low refractive index coating (25),
- said bonding agent coating (23) and
- said high refractive index coating (11),
said bonding agent coating (23) being placed between each group of three successive coatings,
- said adhesion promoting coating (27) and
- said antiabrasive coating (29).

10. Optically active material according to claim 6, 7 or 9, wherein the substrate (17) is inorganic and the adhesion promoting coating (19) is an epoxy-alkoxy silane.

11. Optically active material according to claim 6, 7 or 9, wherein the substrate (17) is organic and the adhesion promoting coating (19) is of γ-amino-alkoxysilane or epoxy-oxo-alkoxysilane.

12. Optically active material according to claim 6 or 7, wherein the average refractive index coating (21) is formed from a material incorporating titanium or zirconium alkoxide and methacryloxypropyltrimethoxysilane.

13. Optically active material according to claim 6, 7 or 9, wherein the bonding agent coating (23) is chosen from among prehydrolyzed epoxyalkoxysilanes containing a basic condensation catalyst.

14. Optically active material according to claim 6, 7 or 9, wherein the coupling agent coating (27) is chosen from among hexamethyl disilazane or 1H,1H,2H,2H-perfluorodecyltriethoxysilane.

15. Optically active material according to claim 6, 7 or 9, wherein the antiabrasive coating (29) is of polytetrafluoroethylene.
